# EUROPEAN PATENT APPLICATION

(11) **EP 4 826 886 A1**
(43) Date of publication of application: **21.10.2026**
(21) Application number: 25898773.4
(22) Date of filing: 14.08.2025
(51) Int. Cl.: H01M 50/505, H01M 50/519, H01M 50/588, H01B 7/04, H01B 7/08

(54) **BATTERY MODULE AND BATTERY PACK INCLUDING SAME**

(30) Priority: 28.11.2024 KR 20240173642
(71) Applicant: LG Energy Solution, Ltd., Seoul 07335 (KR)
(72) Inventor: CHOI, Gyuwan, Daejeon 34122 (KR)
(74) Representative: BCKIP Part mbB
(86) International application number: PCT/KR2025/012421
(87) International publication number: WO 2026/116681

(57) **Abstract**

A battery module according to an embodiment of the present invention includes a battery cell stack in which a plurality of battery cells are stacked, a busbar frame formed on a front surface and a rear surface of the battery cell stack, respectively, a connecting portion connected to an upper portion of the battery cell stack and configured to interconnect the busbar frames formed on the front surface and the rear surface, a first connector connected to both side end portions of the connecting portion, a second connector fixed to the busbar frame, and coupled to the first connector, and a dam portion disposed in a lower portion of the second connector and fixed to the busbar frame.

## Description

### [Technical Field]

### Cross-reference to related application(s)

This application claims priority to and the benefit of Korean Patent Application No. 10-2024-0173642 filed with the Korean Intellectual Property Office on November 28, 2024, the entire contents of which are incorporated herein by reference.

The present invention relates to a battery module and a battery pack including the same, and more particularly, the present disclosure relates to a battery module and a battery pack including the same provided with a sensing connecting portion having an improved durability.

### [Background Art]

In modern society, as portable devices such as mobile phones, laptops, camcorders, and digital cameras are used in daily life, development of techniques related to mobile devices as described above is becoming active. In addition, a secondary battery capable of charging and discharging is a measure to solve air pollution such as from conventional gasoline vehicles using fossil fuels, and is used as a power source for electric vehicles (EVs), hybrid electric vehicles (HEVs), and plug-in hybrid electric vehicles (P-HEV), and thus a need for development of secondary batteries is increasing.

Currently commercially available secondary battery include a nickel cadmium battery, a nickel hydrogen battery, a nickel zinc battery, and a lithium secondary battery, and among them, the lithium secondary battery has little memory effect compared to nickel-based secondary batteries, so it is in the spotlight as it is freely charged and discharged, has a very low self-discharge rate, and has high energy density.

Such a lithium secondary battery mainly uses a lithium-based oxide and a carbon material as a positive electrode active material and a negative electrode active material, respectively. The lithium secondary battery includes an electrode assembly in which a positive electrode plate and a negative electrode plate to which a positive electrode active material and a negative electrode active material are respectively applied with a separator therebetween, and a battery case for sealing and housing the electrode assembly together with an electrolyte.

In general, a lithium secondary battery may be classified into a can-type secondary battery in which an electrode assembly is embedded in a metal can, and a pouch-type secondary battery in which an electrode assembly is embedded in a pouch of an aluminum laminate sheet depending on a shape of an exterior material.

In the case of secondary batteries used for small devices, 2 to 3 battery cells are provided, but in the case of secondary batteries used for mid- to large-sized devices such as vehicles, a battery module in which a plurality of battery cells are electrically connected is used. In such a battery module, a plurality of battery cells are connected in series or parallel to each other to form a battery cell stack, thereby improving capacity and output. One or more battery modules are able to be mounted together with various control and protection systems such as a battery management system (BMS), a battery disconnect unit (BDU), and a cooling system to form a battery pack.

A battery pack includes battery modules as its subcomponents, and each battery module, in turn, contains multiple battery cells. In addition, a number of battery cells included in a battery module or a number of battery modules included in a battery pack may be determined in various ways depending on an output or capacity of the battery pack required for an electric vehicle.

Such a battery module is configured to include a battery cell stack in which a plurality of battery cells are stacked, a busbar frame respectively formed on both ends of the battery cell stack, a connecting portion connecting the busbar frame at the both ends.

A connector is connected to the both ends of the connecting portion, to be coupled to the connector fixed to the busbar frame disposed at the both ends of the battery cell stack, respectively. At this time, due to a space problem or the like, there is a limit to firmly fixing a connector fixed to a busbar frame by bolting or the like. Due to this, when a force is applied as a connector of a connecting portion is fastened, the connector fixed to the busbar frame is also applied with a strong force, which may cause a problem such as detachment of a portion fixed to the busbar frame.

### [Disclosure]

### [Technical Problem]

The task to be solved by the present invention is to provide a battery module and a battery pack including the same that can firmly fix a connector connected to a connecting portion formed of a flexible flat cable so as not to be detached, without causing a problem in terms of space utilization.

However, the problems to be solved by the exemplary embodiments of the disclosure are not limited to the above-described problems and may be expanded in various ways within the scope of the technical idea included in the disclosure.

### [Technical Solution]

A battery module according to an embodiment of the present invention includes a battery cell stack in which a plurality of battery cells are stacked, a busbar frame formed on a front surface and a rear surface of the battery cell stack, respectively, a connecting portion connected to an upper portion of the battery cell stack and configured to interconnect the busbar frames formed on the front surface and the rear surface, a first connector connected to both side end portions of the connecting portion, a second connector fixed to the busbar frame, and coupled to the first connector, and a dam portion disposed in a lower portion of the second connector and fixed to the busbar frame.

The dam portion may be disposed to surround a lower portion of the second connector and both side surfaces of the second connector.

The battery module may further include a coated portion located between the dam portion and the second connector, and having a coating solution applied thereto and cured.

A thickness of the coated portion may be smaller than or equal to a height of the dam portion.

The battery module may further include a flexible printed circuit board coupled to the busbar frame and connected to the plurality of battery cells and the second connector, where the second connector may be fixed to the flexible printed circuit board by soldering.

The dam portion may be fixed on the flexible printed circuit board.

The connecting portion may be formed of a flexible flat cable (FFC).

The connecting portion may include a connection body located on an upper surface of the battery cell stack, and a connection cable bent in a direction both ends of the connection body toward the busbar frame and connected to the first connector.

The coated portion may have insulating properties.

A battery pack according to an embodiment of the present invention includes one or more battery modules according to the above.

### [Advantageous Effects]

According to a battery module according to an embodiment of the present invention, a connector connected to a connecting portion formed of a flexible flat cable may be stably supported so as not to be detached, and a space required for the support structure can be minimized.

The effects of the present invention are not limited to the effects mentioned above, and other effects not mentioned can be clearly understood by those skilled in the art from the description of the claims.

### [Description of the Drawings]

FIG. 1 is an exploded perspective view of a battery module according to an embodiment of the present invention.
FIG. 2 is a drawing representing coupling of the busbar frame and the connecting portion of FIG. 1.
FIG. 3 is an enlarged perspective view representing the first connector mounted on the second connector.
FIG. 4 is an enlarged front view representing the first connector mounted on the second connector.

### [Mode for Invention]

Hereinafter, the present disclosure will be described in detail with reference to the accompanying drawings, in which embodiments of the present disclosure are shown. As those skilled in the art would realize, the described embodiments may be modified in various different ways, all without departing from the spirit or scope of the present disclosure.

The drawings and description are to be regarded as illustrative in nature and not restrictive, and like reference numerals designate like elements throughout the specification.

Further, since sizes and thicknesses of components shown in the accompanying drawings may be arbitrarily given to facilitate understanding and ease of description, the disclosure is not limited to the illustrated sizes and thicknesses. In the drawings, the thickness of layers and regions are exaggerated for clarity. In the drawings, to facilitate understanding and ease of description, the thicknesses of some layers and regions may be exaggerated.

It will be understood that when an element such as a layer, film, region, or substrate is referred to as being "on" another element, it can be directly on the other element or intervening elements may also be present. In contrast, when an element is referred to as being "directly on" another element, there are no intervening elements present. Further, throughout the specification, the word "on" a target element will be understood to be positioned above or below the target element, and will not necessarily be understood to be positioned "at an upper side" based on an opposite to gravity direction.

In addition, unless explicitly described to the contrary, the word "comprise", and variations such as "comprises" or "comprising", will be understood to imply the inclusion of stated elements but not the exclusion of any other elements.

In addition, the phrase "on a plane" means a view from a position above the object (e.g., from the top), and the phrase "in a cross-section" means a view of a cross-section of the object which is vertically cut from the side.

Hereinafter, a battery module according to an embodiment of the present invention will be described in detail.

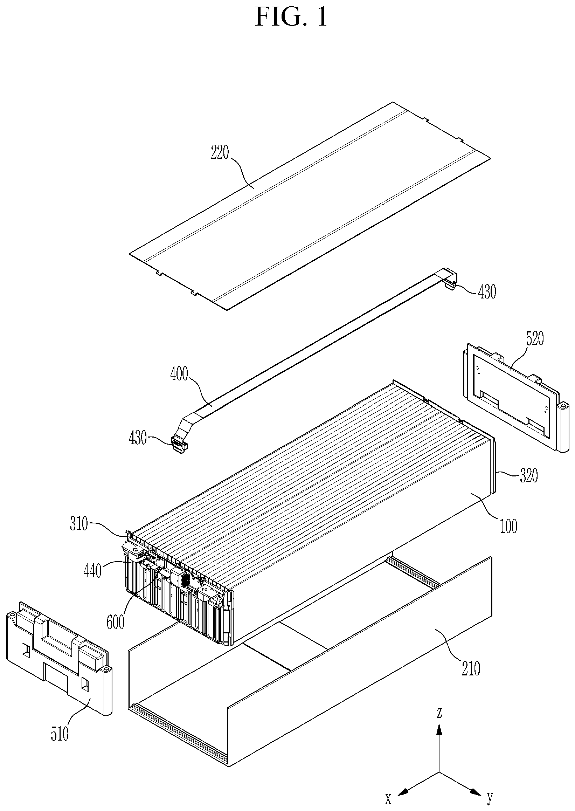

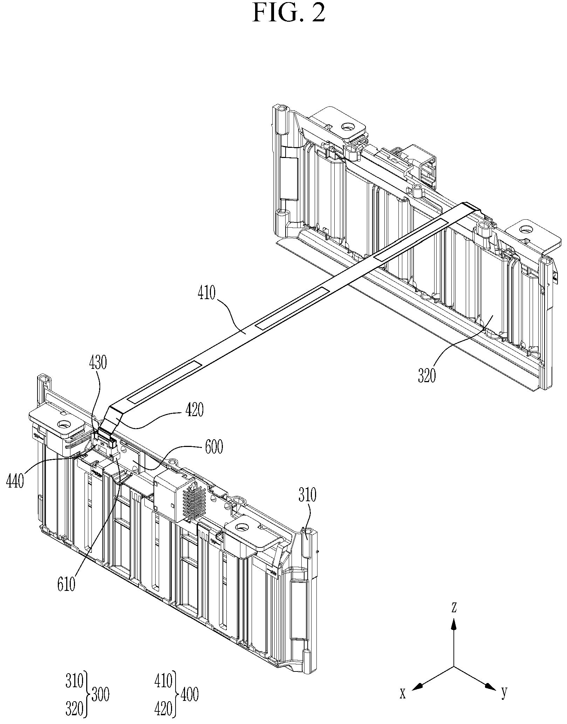

FIG. 1 is an exploded perspective view of a battery module according to an embodiment of the present invention, and FIG. 2 is a drawing representing coupling of the busbar frame and the connecting portion of FIG. 1.

Referring to FIG. 1 and FIG. 2, a battery module according to an embodiment of the present invention includes a battery cell stack 100 in which , a plurality of battery cells are stacked, a busbar frame 300 respectively formed on a front surface and a rear surface of the battery cell stack 100, a connecting portion 400 connecting the busbar frame 300, a first connector 430 coupled to both end portions of the connecting portion 400, and a second connector 440 fixed to the busbar frame 300 and coupled to the first connector 430.

The battery module of the present embodiment may further include a lower frame 210 formed in a U-shaped structure having a bottom surface and both sides to cover a lower surface and both sides of the battery cell stack 100 and an upper frame 220 covering an upper surface of the battery cell stack 100. However, the case accommodating the battery cell stack 100 is not limited thereto, and may be a rectangular pipe-shaped case surrounding a bottom surface, a upper surface, and both lateral sides of the battery cell stack 100, or a structure in which a lower plate is coupled to an upper frame of an inverted U-shaped structure surrounding an upper surface and both sides, but is not particularly limited. In addition, a plurality of battery cell stacks 100 can be assembled to directly form a battery pack without having such a case, which may be modified in various ways.

The battery cell may be a secondary battery and configured as a pouch-type secondary battery. Such a battery cell may be provided in a plural quantity, and the plurality of battery cells may be stacked with each other to be electrically connected to each other, thereby forming the battery cell stack 100. Although not illustrated specifically, each of the plurality of battery cells may include an electrode assembly, a battery case, and an electrode lead protruding from the electrode assembly. On the other hand, as shown in FIG. 1, the plurality of battery cells may be disposed to be parallel to both side surfaces of the lower frame 210 and sequentially stacked along a y-axis direction.

The battery cell stack 100 is formed to be surrounded by the lower frame 210 covering a lower surface and both sides and the upper frame 220 covering an upper surface. At this time, the battery cell stack 100 can be mounted within the frame by a method of inserting the battery cell stack 100 on the lower frame 210, and then covering the upper surface of the battery cell stack 100 through the upper frame. The lower frame 210 and the upper frame 220 are joined with each other, to accommodate the battery cell stack 100 located inside the frame. At this time, the two frames may be joined through welding, however, the joining method of the frames is not limited thereto, and may be implemented through various embodiments.

The busbar frame 300 is formed on each of the front and rear surfaces of the battery cell stack 100. The busbar frame 300 may include a busbar and a cell connecting board, and may electrically connect electrode leads of the plurality of battery cells through a busbar mounted on the busbar frame 300. For example, the electrode leads of the battery cell may be bent and connected to the busbar after passing through a slit formed in the busbar frame 300.

The busbar frame 300 may be formed of a first busbar frame 310 formed on a first side surface of the battery cell stack 100 and a second busbar frame 320 formed on a second side surface of the battery cell stack 100, to electrically connect the electrode leads of the both sides of the battery cell stack 100, respectively.

End plates 510 and 520 may be coupled to the opened front and rear surfaces of the combined the lower frame 210 and the upper frame 220. That is, the end plates 510 and 520 may cover the first and second busbar frames 310 and 320.

The end plates 510 and 520 may protect various electrical components provided in the first and second busbar frames 310 and 320 from external impact, and at the same time, guide the electrical connection between the first and second busbar frames 310 and 320 and an external power source. An insulation member (not shown) may be inserted between the end plates 510 and 520 and the first and second busbar frames 310 and 320, and by this, an unnecessary electrical connection between the busbar frames 310 and 320 and the end plates 510 and 520 may be blocked.

The connecting portion 400 is provided between the first and second busbar frames 310 and 320, to electrically connect the first and second busbar frames 310 and 320. Conventionally, a flexible printed circuit (FPC) is provided between the busbar frames, so that two busbar frames are connected through the flexible circuit board, and a cover plate is installed on the upper end of the flexible circuit board, to prevent the damage of the flexible circuit board. However, according to an embodiment of the present invention, the cover plate that was protecting and supporting the flexible circuit board is removed, and the first and second busbar frames 310 and 320 are connected by using a flexible flat cable (FFC) formed as a flat cable that does not require a protection member such as a cover plate instead of the flexible circuit board. Through the connection of two busbar frames through an FFC, the battery module height can be reduced, thereby increasing the energy density of the battery, and securing an installation space of the battery module, and improving driving performance and fuel efficiency when the battery module is installed in the vehicle.

As described above, the connecting portion 400 formed as an FFC according to an embodiment of the present invention is located between the upper frame 220 and the battery cell stack 100. That is, the connecting portion 400 may be disposed and fixed in an upper portion of the battery cell stack 100.

The connecting portion 400 may include a connection body 410 located on the upper surface of the battery cell stack 100 and a connection cable 420 bent from both ends of the connection body 410 toward the busbar frame 300 and connected to the first connector 430. The connecting portion 400 may be formed of a flexible flat cable, that is, a soft cable to be capable of bending, and since a circuit for electrical connection between busbar frames is inserted within the cable, it is easy to cope with an external impact.

In addition, the connecting portion 400 may be formed in a flexible and planar shape, that is, a flat shape. Therefore, compared to wire-type sensing circuits that have a strong bending resistance, they can be bent flexibly, making it easy to set a constant position during automatic assembly. In addition, whereas an additional structure to protect the wire is necessary in the case of a wire type, and it may not be directly applied to a battery module but requires a separate assembly process, the flexible flat cable can be directly applied to the battery module assembly without a separate protection structure.

An insertion portion (not shown) into which the connection cable 420 is inserted may be formed in the first connector 430, and an open direction of the insertion portion may face upward (z-axis direction) depending on a bending direction of the connection cable 420.

The connecting portion 400 is connected to a flexible printed circuit board (FPCB) 600 mounted on an upper end portion of the busbar frame 300 through the first connector 430. That is, as the first connector 430 is coupled to the second connector 440 connected to the flexible printed circuit board 600, the connecting portion 400 and the flexible printed circuit board 600 are connected to each other.

At this time, the second connector 440 may be fixed to the flexible printed circuit board 600 through soldering. That is, since the second connector 440 connected to the connecting portion 400 formed as an FFC, which is a small component, is also a small component, there is a limit to fixing it with an additional component part through bolting or the like. For this reason, it is fixed only by soldering to the flexible printed circuit board 600, and when the first connector 430 is connected to the second connector 440 in this structure, if the force applied is greater than the force that the soldering can withstand, the second connector 440 may be detached. In order to prevent this, in the present embodiment, a dam portion 610 disposed in a lower portion (downside in the z-axis direction) of the second connector 440 is further included. That is, by further including the dam portion 610 formed to surround a lower end portion of both lateral sides and a bottom surface of the second connector 440, the second connector 440 may be prevented from being pushed out and detached.

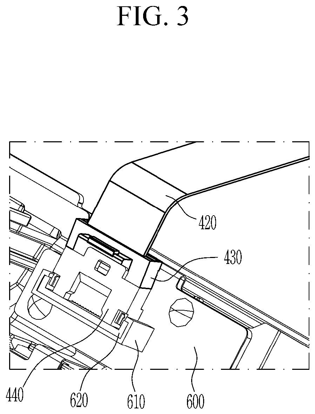

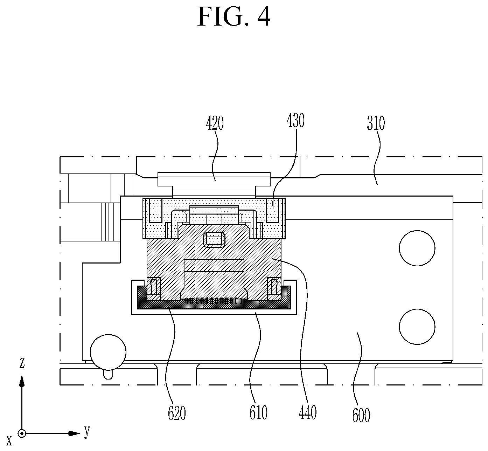

Hereinafter, the configuration will be described in further detail with further reference to FIG. 3 and FIG. 4.

FIG. 3 is an enlarged perspective view representing the first connector mounted on the second connector. FIG. 4 is an enlarged front view representing the first connector mounted on the second connector.

As shown in FIG. 3 and FIG. 4, the dam portion 610 may be fixed on the flexible printed circuit board 600 formed to be fixed to the busbar frame 300. At this time, the dam portion 610 may be formed to surround an entire lower end portion, a lower end portion of a side surface, that is, a lower side edge, of the second connector 440. In addition, it may be formed in a shape protruding from the flexible printed circuit board 600, to have an interior space. The dam portion 610 may be integrally formed with the flexible printed circuit board 600, and may be attached thereto after being fabricated as a separate structure, which is not particularly limited.

A coated portion 620 may be formed in the space formed by the dam portion 610. The coated portion 620 may be formed between the second connector 440 and the dam portion 610, and may be formed by conformal coating generally used for a circuit board. That is, it can be formed by applying a coating solution such as an acryl-based, olefinbased, silicon-based, urethane-based, or fluorine-based solution and then curing it. The coated portion 620 may have insulating properties, may be formed in an inner side space formed by the dam portion 610, to have a thickness that is smaller than or equal to the protruding height (i.e., height in the x-axis direction) of the dam portion 610.

As such, by forming a dual-support structure of the coated portion 620 and the dam portion 610 in a lower portion of the second connector 440, the second connector 440 can be prevented from being pushed even when a load due to the fastening of the first connector 430 is applied, thereby preventing the second connector 440 from being detached. That is, unlike the case where the second connector 440 is supported only by a shelf-shaped support structure, because it has a dual structure of the coating portion 620 formed inside the dam portion 610, detachment can be prevented more effectively, and also, if only the coating portion 620 is formed, it is difficult to specify the application area of the coating solution, which may cause problems in the manufacturing process, but since the coating portion 620 is formed inside the dam portion 610, manufacturability can also be secured. In particular, at this time, since the fixing of the second connector 440 is done only with a support structure by soldering, unlike a bolting type support structure that requires a separate space, the space required for fixing can be minimized while stably supporting the second connector 440.

One or more battery modules according to the present exemplary embodiment described above may be mounted together with various control and protection systems, such as a battery management system (BMS) and a cooling system to form a battery pack.

The battery module or the battery pack may be applied to various devices. These devices may be applied to transportation units, such as electric bicycles, electric cars, and hybrid vehicles, but are not limited thereto and may be applied to various devices that may use secondary batteries.

While this disclosure has been described in connection with what is presently considered to be practical embodiments, it should be understood that the disclosure is not limited to the disclosed embodiments, but, on the contrary, is intended to cover various modifications and equivalent arrangements included within the spirit and scope of the appended claims.

### [Description of Symbols]

100: battery cell
210: lower frame
220: upper frame
300: busbar frame
310: first busbar frame
320: second busbar frame
400: connecting portion
410: connection body
420: connection cable
430: first connector
440: second connector
510, 520: end plate
600: flexible printed circuit board (FPCB)
610: dam portion
620: coated portion

## Claims

1. A battery module, comprising:
a battery cell stack in which a plurality of battery cells are stacked;
a busbar frame formed on a front surface and a rear surface of the battery cell stack, respectively;
a connecting portion connected to an upper portion of the battery cell stack and configured to interconnect the busbar frames formed on the front surface and the rear surface;
a first connector connected to both side end portions of the connecting portion;
a second connector fixed to the busbar frame, and coupled to the first connector; and
a dam portion disposed in a lower portion of the second connector and fixed to the busbar frame.

2. The battery module of claim 1, wherein the dam portion is disposed to surround a bottom surface of the second connector and lower end portions of both side surfaces of the second connector.

3. The battery module of claim 2, further comprising a coated portion located between the dam portion and the second connector, and having a coating solution applied thereto and cured.

4. The battery module of claim 3, wherein a thickness of the coated portion is smaller than or equal to a height of the dam portion.

5. The battery module of claim 1, further comprising a flexible printed circuit board coupled to the busbar frame and connected to the plurality of battery cells and the second connector,
wherein the second connector is fixed to the flexible printed circuit board by soldering.

6. The battery module of claim 5, wherein the dam portion is fixed on the flexible printed circuit board.

7. The battery module of claim 1, wherein the connecting portion is formed of a flexible flat cable (FFC).

8. The battery module of claim 1, wherein the connecting portion comprises:
a connection body located on an upper surface of the battery cell stack; and
a connection cable bent from both ends of the connection body in a direction toward
the busbar frame and connected to the first connector.

9. The battery module of claim 3, wherein the coated portion has insulating properties.

10. A battery pack comprising one or more battery modules according to claim 1.
